(19) Europäisches Patentamt / European Patent Office / Office européen des brevets

(11) **EP 3 681 097 A1**

(12) **EUROPEAN PATENT APPLICATION**
published in accordance with Art. 153(4) EPC

(43) Date of publication:
**15.07.2020 Bulletin 2020/29**

(51) Int Cl.:
*H04L 9/08* (2006.01)     *G09C 1/00* (2006.01)

(21) Application number: **18854302.9**

(22) Date of filing: **29.03.2018**

(86) International application number:
**PCT/JP2018/013207**

(87) International publication number:
**WO 2019/049408 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.09.2017   JP 2017173060**

(71) Applicant: **Health Media Inc.**
**Tokyo 141-0022 (JP)**

(72) Inventors:
• **NODA Keiichi**
**Tokyo 141-0022 (JP)**
• **YONEMOTO Kumiko**
**Ichikawa-shi**
**Chiba 272-0026 (JP)**

(74) Representative: **Bandpay & Greuter**
**30, rue Notre-Dame des Victoires**
**75002 Paris (FR)**

(54) **SECRET INFORMATION RESTORABLE VALUE DISTRIBUTION SYSTEM AND METHOD**

(57)     A method-performed by a computer is provided by which secret reconstructible value distribution system is provided. The method includes generating n secret reconstructible values based on an original secret used to process predetermined information, wherein the original secret can be reconstructed using at least k secret reconstructible values among the generated n secret reconstructible values and n>=k>=2 is established, storing the generated n secret reconstructible values in the corresponding n physical storage devices, and deleting the generated original secret.

**FIG.7**

**Description**

Technical Field

This disclosure relates to secret reconstructible value distribution system and method. In particular, this disclosure relates to secret reconstructible value distribution system and method by storing in a distributed manner a secret reconstructible value (share) for restoring an original secret in physical storage media, thereby enhancing security.

Background Art

A computer system providing an on-line transaction through a public network such as the Internet has been used. An exemplary computer system includes, for example, a virtual currency management system called bitcoin that is a peer-to-peer (P2P)-type payment network. The bitcoin uses a public key encryption method by which a pair of two keys is used to encrypt and decrypt data.

The following section will briefly describe the flow of a virtual currency money transfer procedure for bitcoin. (1) First, a party having a desire to pay a virtual currency (remittance source) generates a pair of a public key and a secret key. (2) Based on the public key, the remittance source generates an address (account number) (a collection of the addresses functions as a "wallet"). (3) The remittance source puts a signature on money transfer information (transaction history information such as the bitcoin or address to be sent) using the secret key thereof. (4) The remittance source broadcasts the money transfer information to the P2P network. (5) A party to receive the virtual currency (remittee) confirms that the transaction is valid by verifying the public key included in the transaction and the money transfer information already having the signature.

In the case of the bitcoin, the secret key that may be known only to the remittance source is used to put s signature to the money transfer information. Thus, the secret key must be managed as a high-level secret. This shows that the bitcoin mechanism has a challenge of how to manage the secret key. In consideration of security, the secret key generally uses 64 digits alphanumeric characters in a random manner. Thus, if the secret key is accidentally unknown, then the bitcoin corresponding to the address cannot be used again. Due to the background as described above, some users use various devices and services to manage secret keys. For example, some users have a plurality of accounts depending on the applications of the bitcoins so that the accounts are managed by different methods depending on the convenience and security for example.

Citation List

Non-Patent Literature

[Non-Patent Publication 1] Hiroshi Doi, "Himitsu Bunsan Hou To Sono Ouyou Ni Tsuite", Jouhou Security Sougou Kagaku, Volume 4, [online], November 2012, Institute of Information Security, [based on the search made on Augusr 30, 2017], Internet<URL:https://www.iisec.ac.jp/proc/vol0004/doi.pdf>
[Non-Patent Publication 2] G. R. Blakley, Safeguarding cryptographic keys, Proc. of the National Computer Conference, Vol.48, pp.313-317, 1979, <URL:https://www.computer.org/csdl/proceedings/afips/1979/5087/00/50870313.pdf>

Summary of Invention

In order to use bitcoin, a user must use a computer terminal connected to a P2P network (e.g., smart phone, tablet computer, and personal computer). So long as the terminals are connected to the network, a risk exists where a malicious third party may have an unauthorized access to the computer terminal. Thus, the risk of the secret key leaked to the third party cannot be excluded completely.

Non-Patent Publication 1 discloses a Shamir threshold scheme. According to the Shamir threshold scheme, n unique shares are generated based on the original secret and these unique shares are given to n sharers. Among the n shares, k shares (k<n) can be used to reconstruct the original secret. Specifically, even when unique shares are lost in an amount of n-k, the remaining k unique shares can be used to reconstruct the original secret. This means that the information cannot be reconstructed even when k-1 shares are used. This technique can be used to distribute shares to reconstruct the original secret.

However, even when the shares are distributed, if these shares are stored in a storage device connected to the network for example, a risk is caused where a third party may have an unauthorized access to the storage device to leak the k shares. This shows a possibility where, even when the technique disclosed in Non-Patent Publication 1 is used, the original secret cannot be protected appropriately. In particular, when the k shares are stored in storage devices connected to the same LAN, a possibility is caused where a third party passes through a Gateway (Firewall) functioning as an entry to the LAN, which may cause an easy leakage of all of the k shares to the third party.

Ultimate methods of appropriately protecting the original secret include, for example, a technique disclosed in Patent Publication 1 to write down the values of at least k shares on a paper for example and the paper is stored in a strongbox for example. This technique stores the shares using the paper medium and thus prevents the share information from being accessed through a network, thus providing the reduction of the possibility of the leak of the k shares to the third party. However, this method inevitably requires a burden on the user to manage the information.

According to this embodiment, a method-performed by a computer is provided by which the burden on the user to manage information can be reduced and/or the original secret can be appropriately protected. Also according to this embodiment, a computer device is provided by which the burden on the user to manage information can be reduced and/or the original secret can be appropriately protected.

According to a method-performed by a computer or a computer device of one embodiment, a user can protect the original secret appropriately without the need for the information management requiring a huge burden. In particular, shares are stored while being distributed among a plurality of physical storage devices. This can protect, even when one of the stored shares in a distributed manner is leaked, the original secret unless all of the k shares are leaked.

Brief Description of Drawings

Fig. 1 is a graph illustrating the coordinates corresponding to the values of secret keys calculated based on the (k, n) threshold value method based on a conventional technique;

Fig. 2 is a graph illustrating the coordinates corresponding to the values of secret keys calculated based on the (k, n) threshold value method based on the conventional technique;

Fig. 3 is a graph illustrating the coordinates corresponding to the values of secret keys calculated based on the (k, n) threshold value method based on the conventional technique;

Fig. 4 illustrates an example of the configuration the entire computer system of a secret reconstructible value distribution system according to an embodiment;

Fig. 5 illustrates an example of the detailed configuration of a computer terminal constituting the secret reconstructible value distribution system according to an embodiment;

Fig. 6 illustrates an example of a share generation processing performed by the secret reconstructible value distribution system according to an embodiment; and

Fig. 7 illustrates an example of a secret reconstruction processing performed by the secret reconstructible value distribution system according to an embodiment.

Description of Embodiments

The following section will describe, with reference to the drawings, a secret reconstructible value distribution system according to one embodiment in detail. The secret reconstructible value distribution system according to one embodiment distributes secret reconstructible values (shares) using the Shamir threshold scheme based on a conventional technique (secret distribution method). The Shamir threshold scheme defines k (threshold value) that is the number of shares by which the original secret can be reconstructed, and n (share number) among which the shares are distributed. In addition to the above, the secret reconstructible value distribution system according to one embodiment may use any other secret distribution methods by which a collection by which information can be reconstructed or cannot be reconstructed can be defined arbitrarily (see Non-Patent Publication 2).

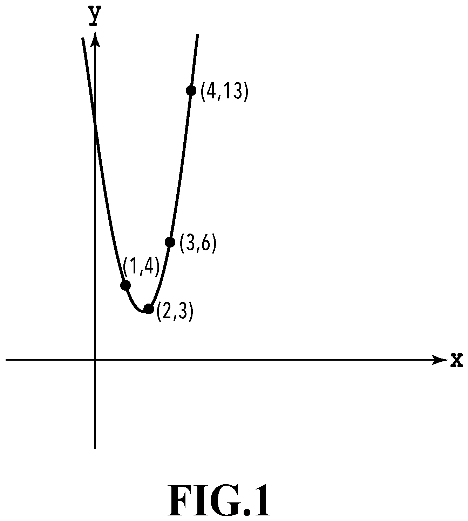

First, the following section will briefly describe the Shamir threshold scheme based on the conventional technique with reference to Fig. 1 to Fig. 3. The Shamir threshold scheme (hereinafter referred to as "(k, n) threshold value method") is based on an assumption that an original secret S is shared among n persons. The n persons have n shares generated using a predetermined polynomial, respectively. The original secret S can be reconstructed using k shares among them. Specifically, the generated n shares are shared among the n persons among which k shares owned by k persons can be used to reconstruct the original secret S. Herein, this number n is called a share number and the number k is called a threshold value.

In order to generate a share, an arbitrary k-1th order polynomial is used that has a constant term S. In the expression, k is 3 and n is 4 (i.e., 4 shares are generated among which 3 shares can be used to reconstruct the original secret S) and the original secret is 9. Thus, the k-1th order polynomial (i.e., an arbitrary quadratic polynomial having a constant term of 9) is used. For example, when the first term has a coefficient of 2 and the second term has a coefficient of 7, then the following equation (1) is established.

$$f(x)=2x^2-7x+9 \qquad \text{equation (1)}$$

In order to generate n=4 shares, the share numbers {1, 2, 3, and 4} are allocated. When f(1), f(2), f(3), and f(4) are applied to the equation (1), then the following collection of the values of the n shares is calculated: n={(1,4),(2,3),(3,6),(4,13)}.

Fig. 1 is a graph illustrating the curve including the respective coordinates of the shares calculated in the manner as described above. The curve shown in Fig. 1 includes the coordinates at the four points corresponding to the values of the four shares. This curve shows the quadratic polynomial of the equation (1). The (k, n) threshold value method can use the k=3 shares among the n=4 shares to reconstruct the original secret. Specifically, a similar curve can be drawn by including arbitrary 3 coordinates among the four coordinates shown in Fig. 1. On the other hand, the use of the k-1 shares cannot reconstruct the original secret. Specifically, a similar curve cannot be drawn by arbitrary 2 coordinates among the four coordinates shown in Fig. 1.

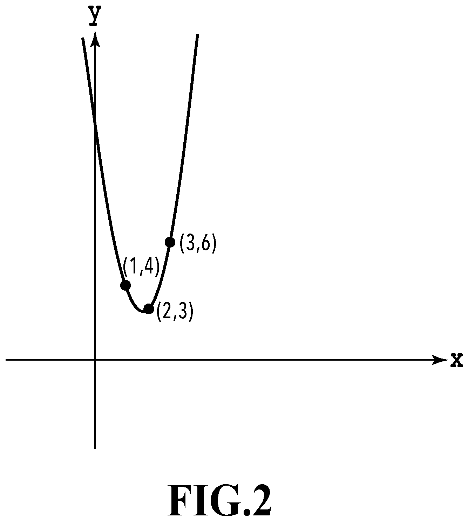

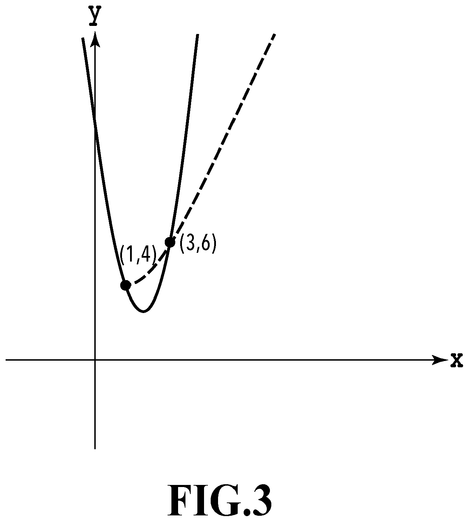

Fig. 2 is a graph illustrating a curve including the coordinates of the values of the k=3 shares. As can be seen from Fig. 2, the k=3 coordinates functioning as a threshold value can draw the same curve as that shown in Fig. 1. Fig. 3 is a graph illustrating the curve including the respective coordinates of the values of k-1=2 shares. As can be seen from Fig. 3, only the coordinates at the threshold value k-1=2 can also a curve shown by the broken line for example as well, and thus cannot necessarily draw the same curve as that shown in Fig. 1. Specifically, the use of the k-1(2) shares cannot derive the quadratic polynomial shown in equation (1), thus failing to reconstruct the original secret S.

The values of the k shares can use a polynomial interpolation to reconstruct the original secret, a specific formula of which is shown below. First, since the threshold value k=3 is established, a polynomial for generating the shares is a quadratic polynomial for which $y=x^2+x+$constant term is established. The coefficients of the respective terms are substituted with a, b, and c to obtain $y=a^2+b+c$. Then, k={(1,4),(2,3),(3,6)} is substituted for the collection of the values the k=3 shares. This can consequently derive the equation (2) to the equation (4) as shown below.

$$c=-a-b+4 \qquad \text{equation (2)}$$

$$c=-4a-2b+3 \qquad \text{equation (3)}$$

$$c=-9a-3b+6 \qquad \text{equation (4)}$$

Next, the equation (2) is substituted for the equation (3) and the equation (4), respectively. This can consequently derive a (i.e., the coefficient of the first term of the quadratic polynomial shown in the equation (1)) via the equation (5) and the equation (6) as shown below.

$$3a=-b-1 \qquad \text{equation (5)}$$

$$8a=-2b+2 \qquad \text{equation (6)}$$

$$a=2$$

The value of the coefficient "a" derived from the above equations is substituted for the equation (2) and the equation (3). This can consequently derive, as shown below, b (i.e., the coefficient of the second term of the quadratic polynomial shown in the equation (1)) via the equation (7) and the equation (8).

$$c=-b+2 \qquad \text{equation (7)}$$

$$c=-2b-5 \qquad\qquad \text{equation (8)}$$

$$b=-7$$

Finally, the value of the derived coefficient "a" and the value of the coefficient "b" are substituted for the equation (2). This can consequently derive c=9 (i.e., the value of the constant term of the quadratic polynomial shown in the equation (1)).

When the value of the coefficient derived in the manner as described above is substituted for the quadratic polynomial, then the quadratic polynomial shown in the equation (1) (i.e., the original secret S) can be reconstructed. A specific equation to reconstruct the original secret S has been known as disclosed in Non-Patent Publication 1 for example and thus will not be specifically described herein.

The secret reconstructible value distribution system according to one embodiment uses any secret distribution method including the above-described (k, n) threshold value methods to generate n shares and uses k shares to reconstruct the original secret. Although n>k is established in the (k, n) threshold value method, n=k also may be established depending on a secret distribution method to be used. It is noted that even such a case can use the secret reconstructible value distribution system according to one embodiment.

Herein, a formula used to generate n shares using the secret distribution method will be hereinafter called a secret reconstructible value (share) generation formula. A formula used to reconstruct the original secret using k shares among the generated n shares will be called a secret reconstruction formula. When the secret reconstructible value distribution system according to one embodiment uses the (k, n) threshold value method, then the share generation formula and the secret reconstruction formula use the formula s disclosed in Non-Patent Publication 1, respectively. When the secret reconstructible value distribution system according to one embodiment uses another secret distribution method in addition to the (k, n) threshold value method, then a share generation formula and a secret reconstruction formula corresponding to the secret distribution method are used, respectively.

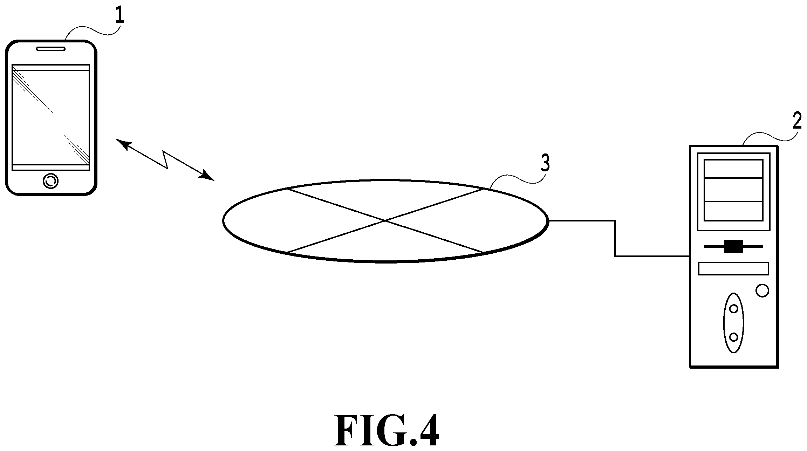

Next, with reference to Fig. 4, an example is shown that illustrates the configuration of the entire computer system constituting the secret reconstructible value distribution system according to one embodiment. The secret reconstructible value distribution system according to this embodiment may not be used independently and may be basically used together with a service (computer system) using the secret reconstructible value distribution system. However, another configuration also may be used in which the above-described computer system itself includes the secret reconstructible value distribution system according to this embodiment.

The following embodiment will describe an example in which the secret reconstructible value distribution system according to one embodiment operates in cooperation with a computer system (hereinafter a payment system) that provides a payment service using a virtual currency such as bitcoin. In this example, when the virtual currency is used to perform a payment (money transfer), then the user (remittance source) generates a secret key to use the generated secret key to put a signature on the transaction history information of the virtual currency. Based on the secret key generated in the payment system, n shares are generated by the secret reconstructible value distribution system according to one embodiment and the secret key is reconstructed based on k shares.

As shown in Fig. 4, the secret reconstructible value distribution system according to this embodiment includes a computer terminal 1 and a server computer 2 that are connected via a network 3 (a public network such as the Internet, a P2P network in this embodiment).

The computer terminal 1 is a computer device implementing the secret reconstructible value distribution system according to one embodiment. The computer terminal 1 may be implemented in a smart phone, a tablet computer, and a personal computer for example. A user uses the computer terminal 1 to input predetermined information to generate n shares among which k shares are used to reconstruct the original secret.

The server computer 2 is a computer device that executes functions such as a payment service using the secret reconstructible value distribution method according to one embodiment. In this embodiment, the computer terminal 1 independently generates n shares and performs operations to reconstruct the original secret. However, the computer terminal 1 also may operate in cooperation with the server computer 2 to implement the secret reconstructible value distribution system. In this case, depending on a request from the computer terminal 1, the server computer 2 generates n shares.

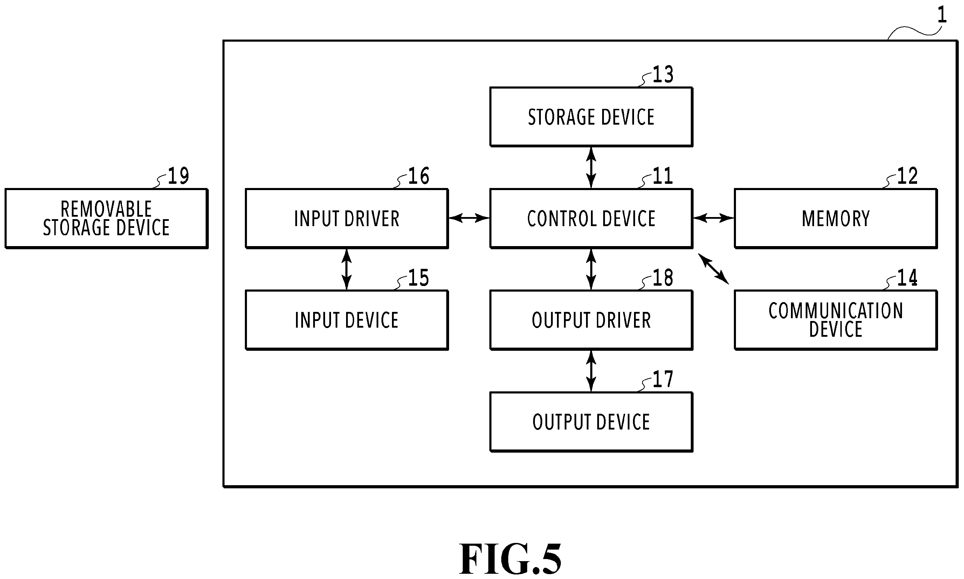

Next, with reference to Fig. 5, the following section will describe an example of the detailed configuration of the computer terminal 1 implementing the secret reconstructible value distribution system according to one embodiment. The computer terminal 1 includes a control device 11, a memory 12, a storage device 13, a communication device 14, an input device 15, an input driver 16, an output device 17, and an output driver 18.

The control device 11 includes a processor for example and may include a central processing unit (CPU), a graphic processing unit (GPU), and one or a plurality of control device core(s). The control device 11 executes a predetermined program (OS and application program). The memory 12 may include a volatile or non-volatile memory (e.g., a random access memory (RAM), a dynamic RAM, or a cache memory). The memory 12 temporarily stores program data to be executed by the control device 11.

The storage device 13 is a storage device included in the computer terminal 1 that may include, for example, a hard disk drive, a solid state drive, an optical disc, and a flash drive. The storage device 13 stores therein one share among the generated n shares. The communication device 14 includes a network interface card (e.g., a LAN card) to send and receive data via the network 3.

The input device 15 may include a keyboard, a key pad, a touch screen, a touch pad, a microphone, an accelerometer, a gyroscope, and a living body scanner for example. The input device 15 receives a user input via the input driver 16 to communicate the input to the control device 11.

The output device 17 may include a display, a speaker, and a printer for example. The output device 17 receives an output from the control device 11 via the output driver 18 to output it (e.g., a visual output via a display, an audio output via a speaker).

The computer terminal 1 is connected to a removable storage device 19. When the removable storage device 19 is connected thereto, information from the removable storage device 19 is communicated via the input driver 16 to the control device 11. An output from the control device 11 is outputted to (or stored in) the removable storage device via the output driver 18. The removable storage device 19 includes any removable and non-volatile storage device (e.g., a flash memory such as a USB memory and a SD card, an optical storage medium such as a CD-ROM and a DVD, and a magnetic storage medium such as a floppy disc).

The secret reconstructible value distribution system according to this embodiment operates in cooperation with a predetermined computer system as described above. Specifically, the computer terminal 1 executes an application program provided by the predetermined computer system. The secret reconstructible value distribution system according to this embodiment is desirably implemented for each service corresponding to the application program executed on the computer terminal 1.

For example, when the computer terminal 1 executes the operating system "iOS®" made by Apple® (e.g., iPhone®), the storage device 13 configures a logically-independent storage area for each service. In this case, the computer terminal 1 for example executes a plurality of application programs and each application program operates in cooperation with the secret reconstructible value distribution system. Thus, a logically-independent storage area is used for each service corresponding to the application program. It means that, when shares (which will be described later) are stored in the storage device 13, the shares can be stored in logically-independent areas for the respective application programs to be executed, thus providing higher security.

When the computer terminal 1 executes an operating system other than the iOS (e.g., Windows® and Android®), a container virtualization technique for example can be used to provide a storage area independently for each service or each user. As described above, when a plurality of application programs are executed and each application program operates in cooperation with the secret reconstructible value distribution system, an independent storage area can be used to provide further security.

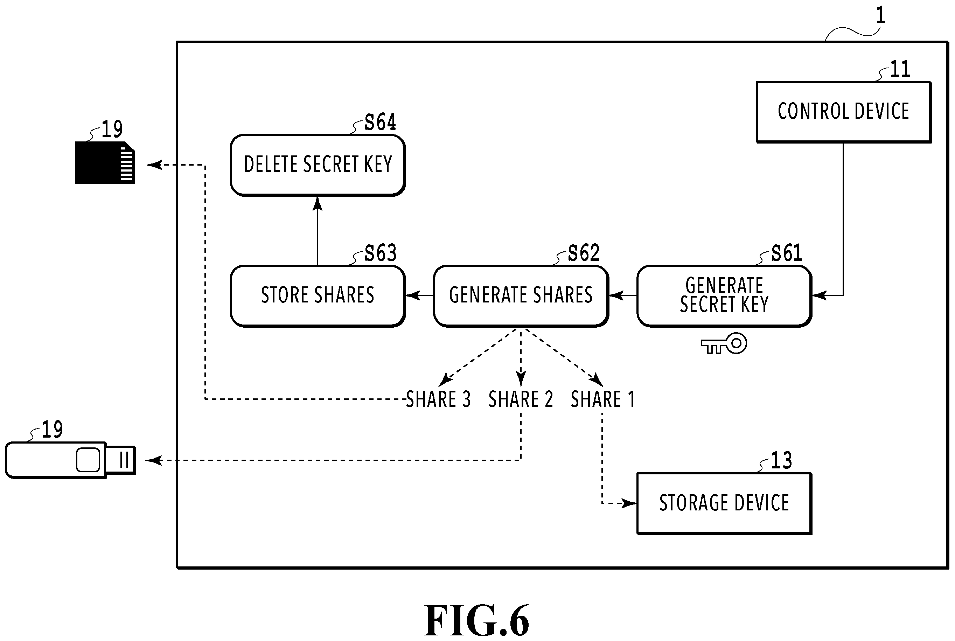

Next, with reference to Fig. 6, the following section will describe the secret reconstructible value (share) generation processing performed by the secret reconstructible value distribution system according to one embodiment. In this embodiment, an example will be described in which a secret key used in the above-described payment service is used as an original secret and shares are generated based on the secret key to store the shares in a distributed manner. In this case, an application program providing the payment service operates in cooperation with the secret reconstructible value distribution system. The application program providing the payment service will be called hereinafter a payment application. The payment service is carried out by exchanging information between the computer terminal 1 and the server computer 2.

As shown in Fig. 6, by executing a predetermined program by the control device 11 of the computer terminal 1, the share generation processing including Step S61 to Step S64 are performed. At Step S61, the control device 11 executes the payment application and generates a secret key. This operation includes generating, based on the conventional technique, the secret key used when a virtual currency money transfer is performed in a payment service. The generated secret key is stored in the memory 12 and/or the storage device 13.

At Step S62, the control device 11 generates, based on the secret key generated in Step S61, shares in an amount of the share number (n) using the above-described share generation formula. This embodiment assumes that n=3 is established. The respective shares are represented as the share 1 to the share 3 for identification. It is also assumed that the threshold value k=2 is established.

The shares generated in Step S62 are files having an extension ".txt" in which values calculated based on the secret distribution method are written. The file name may be determined as "UUID share number.txt" for example. The UUID is uniquely generated for each application program based on an arbitrary version. Specifically, in this embodiment, a unique UUID is generated for each application operating in cooperation with the secret reconstructible value distribution system. Since each generated UUID has a unique number, the share file name is a unique file name for each application program and for each generation. By allocating the respective file names in the manner as described above, the application program can be more independent.

The file name including UUID is merely illustrative. The embodiment is not limited to such a form. Thus, an arbitrary unique numeric value may be allocated to each service performed in cooperation with the secret reconstructible value distribution system according to this embodiment and the numeric value is used as a file name. A generated share is deleted whenever the original secret is reconstructed (which will be described later). A new unique numeric value such as the UUID used for a file name may be allocated whenever the original secret is reconstructed or may be allocated only when the share is lost for example.

In this embodiment, the operations of Step S61 and Step S62 are performed by the computer terminal 1. However, the embodiment is not limited to such a form. The embodiment is not limited to such a form. The operations of Step S61 and/or Step S62 may be performed by the server computer 2. In this case, depending on a request from the computer terminal 1 for example, the server computer 2 generates a secret key and/or shares and send them to the computer terminal 1. When the server computer 2 generates the secret key and/or the shares, they are sent to the computer terminal 1 and are subsequently deleted from the storage area of the server computer 2.

At Step S63, the three shares generated by the control device 11 in Step S62 are stored in predetermined storage areas, respectively. The predetermined storage area includes the above-described removable storage device 19 in addition to a predetermined region of the storage device 13 of the computer terminal 1. Specifically, n shares are separately stored in a plurality of independent physical storage devices (media), respectively. The removable storage device 19 includes a USB memory and a SD card for example.

Combinations of a plurality of physical storage devices to store shares in a distributed manner are not limited to the above-described combinations. For example, the combinations shown in Table 1 to Table 3 may be possible.

[Table 1]

Table 1: Combination 1 of physical storage devices

| Share number | Physical storage area |
|---|---|
| 1 | Storage device 13 |
| 2 | USB memory |
| 3 | SD card |

The combination shown in Table 1 shows that the share 1 is stored in the storage device 13, the share 2 is stored in a USB memory, and the share 3 is stored in a SD card. The storage device 13 is a storage device included in the computer terminal 1 connected to a network and thus is connected to the network 3 via the computer terminal 1. On the other hand, the USB memory and the SD card are not accessed from the network 3 when being removed. Thus, shares stored in the removable storage device 19 such as a USB memory can provide improved security.

As described above, the secret reconstructible value distribution system according to this embodiment cannot reconstruct the original secret even when k-1 shares are used. Specifically, the original secret can be prevented from being leaked by preventing the leakage of n-(k-1) shares for example. The combinations shown in Table 1 allows n-(k-1)(i.e., 2) shares are stored in the removable storage device 19 that cannot be accessed from the network 3, respectively. Thus, this combination is preferred from the viewpoint of security.

In this embodiment, in order to ensure that n shares are stored a plurality of independent physical storage devices, whether the removable storage device 19 is connected to the computer terminal 1 or not may be determined prior to performing Step S61 or Step S62. This operation can allow for recognizing whether the removable storage device 19 is connected by executing, by the control device 11, a device control API (e.g., Usb Device) provided as a standard in an Android operating system. When the control device 11 in this operation determines that the computer terminal 1 is not connected to the removable storage device 19, an error message may be notified to the user (via the output device 17). On the other hand, when the control device 11 determines that the computer terminal 1 is connected to the removable storage device 19, then a message showing this is notified to the user. Then, the operation proceeds to the subsequent Step S64.

By executing the device control API, the type of a device connected to the computer terminal 1 also can be determined. Thus, in order to ensure that n-(k-1) shares are stored in the removable storage device 19, whether the n-(k-1) removable storage devices 19 are connected to the computer terminal 1 or not may be determined. In the combinations shown in Table 1, it is determined whether the SD card and the USB memory are connected, respectively.

In addition to the combinations shown in Table 1, combinations as shown below also can provide similar security.

[Table 2]

Table 2: Combination 2 of physical storage devices

| Share number | Physical storage area |
|---|---|
| 1 | Storage device 13 |
| 2 | USB memory 1 |
| 3 | USB memory 2 |

The combinations shown in Table 2 show that the share 2 and the share 3 are stored in two independent USB memories, respectively. As described above, when a plurality of independent physical storage devices are the same type of the removable storage device 19, a user must store shares in the first physical storage device, subsequently remove the physical storage device, and newly connect the second physical storage device.

As described above, in order to ensure that the same type of other independent physical storage devices store the shares, when the second physical storage device is connected, it may be determined whether it is a physical storage device different from the first physical storage device. This operation is performed by executing, by the control device 11, the above-described device control API to identify the respective physical storage devices (based on the serial numbers of the connected devices for example). When the control device 11 in this operation determines that the second physical storage device is the same as the first physical storage device, an error message may be notified to the user (via the output device 17). On the other hand, when the control device 11 determines that the second physical storage device is different from the first physical storage device, then a message showing this is notified to the user and the operation proceeds to the subsequent Step S64.

Furthermore, combinations as shown below also may be possible.

[Table 3]

Table 3: Combination 3 of physical storage devices

| Share number | Physical storage area |
|---|---|
| 1 | Storage device 13 |
| 2 | Network-connected external storage device |
| 3 | USB memory |

The combinations shown in Table 3 show that the share 1 is stored in the storage device 13, the share 2 is stored in an external storage device connected to a network such as NAS (Network Attached Storage) or SAN (Storage Area Network), and the share 3 is stored in a USB memory. This combination generally allows k shares to be stored in a storage device not accessed from the network. Thus, this combination provides poorer security when compared with the combinations shown in Table 1 and Table 2.

The above-described combinations of the storage devices in which the shares are stored in a distributed manner may be predefined by the secret reconstructible value distribution system or may be set by a user at an arbitrary timing. The share number and the threshold value also may be similarly predefined by the secret reconstructible value distribution system or may be set by a user at an arbitrary timing.

at Step S64, the control device 11 deletes the original secret that was generated in Step S61 and that was stored in the memory 12 and/or the storage device 13. This operation allows the computer terminal 1 to retain no original secret anymore and allows n shares to be stored in a distributed manner. When the removable storage device 19 is not removed after a fixed period has elapsed since the shares are stored, a message showing this may be notified to a user. This consequently can ensure that the removable storage device 19 is removed from the computer terminal 1, i.e., the stored shares are not accessed from the network.

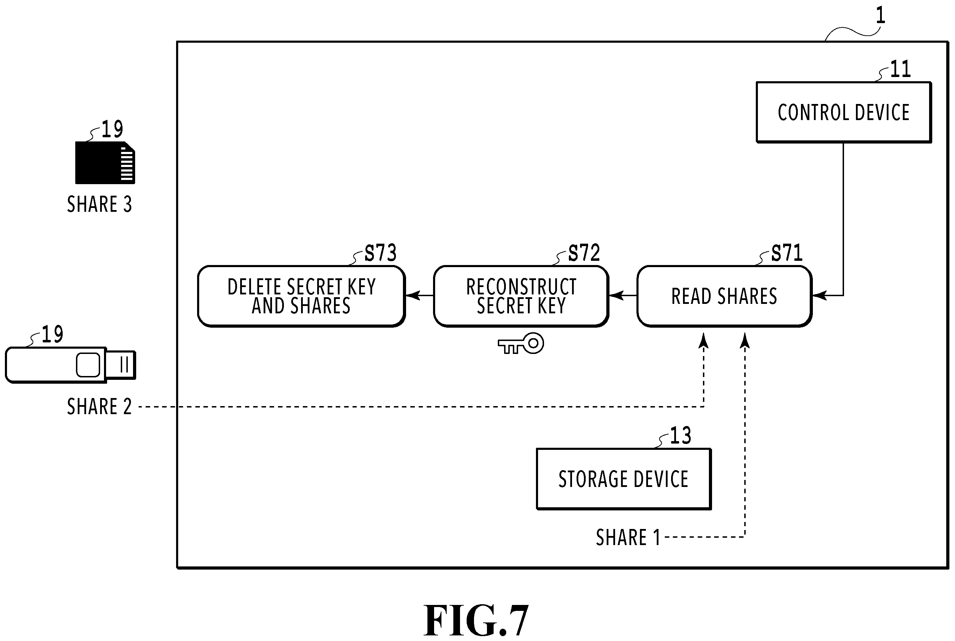

Next, with reference to Fig. 7, the following section will describe the secret reconstruction processing performed by the secret reconstructible value distribution system according to one embodiment. The secret reconstruction processing described in this embodiment includes reconstructing the original secret generated in the share generation processing described in Fig. 6 for normal use. Specifically, this is an example where, the virtual currency money transfer of the payment service is performed without any leakage or loss of a single share so as to reconstruct a secret key for example used to put a signature on the transaction history information of the virtual currency.

There are two types of secret reconstruction processing. The first is the above-described reconstruction processing for normal use. The second is a reconstruction processing used when shares are leaked or a computer terminal is lost or exchanged for example. These two types of reconstruction processing can be selected through a menu screen (not shown) displayed on the output device 17 (e.g., display) of the computer terminal 1 (the former type is assumed as a "normal reconstruction mode" and the latter type is assumed as a "recovery mode". The obj ective of the recovery mode is to generate shares again, not to reconstruct the original secret.

As shown in Fig. 7, the secret reconstruction processing including Step S71 to Step S73 is performed by executing, by the control device 11 of the computer terminal, a predetermined program. At Step S71, the control device 11 reads threshold value (k) shares ("k" is a threshold value) from any of a plurality of physical storage devices. In this embodiment, it is assumed that k=2 is established and the share 1 is read from the storage device 13 and the share 2 is read from the USB memory.

At Step S71, it may be determined whether the share is read from the same physical storage device as that used in Step S63 in the share generation processing described in Fig. 6. As described above, the physical storage device can be identified by executing, by the control device 11, the device control API. Thus, this determination can be performed by storing, by control device 11, the identifiers of the respective physical storage devices when storing therein n shares. When a share is obtained from a physical storage device different from that used during the storage, it may notify an error message to the user (via the output device 17). This can consequently further reduce, even when any share is leaked, the possibility where the original secret is reconstructed by a third party.

At Step S72, the control device 11 reconstructs, based on the k shares obtained in Step S71, the original secret using the above-described secret reconstruction formula. The reconstructed secret is used, in cooperation with the application 1, to put a signature on the transaction history information of the virtual currency in the payment service.

At Step S73, the control device 11 deletes the shares stored in the respective physical storage devices. When the above-described recovery mode is selected, the corresponding shares are deleted from at least k physical storage devices storing therein k shares obtained in Step S71. When the normal mode is selected on the other hand, the corresponding shares are deleted from n physical storage devices storing therein n shares. This deleting operation also may be performed by determining whether a predetermined number of shares are deleted depending on a mode selected by a user.

At Step S73, the control device 11 deletes the secret key reconstructed in Step S72. This deleting operation may be performed by setting a timer when the secret key is reconstructed so that the secret key can be deleted in response to the detection by the timer of the elapse of a predetermined period. It can delete the reconstructed secret key from the computer terminal 1 when the predetermined period has elapsed, thus further reducing the possibility where the original secret is leaked to a third party.

As described above, the share is deleted whenever the generation and reconstruction are carried out, thus providing further-improved security to the original secret. When the above-described recovery mode is selected, the control device 11 provides a control, after Step S73, so as to execute the share generation processing described in Fig. 6 to generate a share based on the original secret reconstructed in Step S72. For example, a different share can be generated by changing the coefficient of the first term and the coefficient of the second term in the quadratic polynomial shown in the equation (1). This processing can provide, even when any one of the shares is lost for example, the generation of a new share again.

As described above, the secret reconstructible value distribution system according to one embodiment has been described. According to the secret reconstructible value distribution system according to one embodiment, a generated share is stored in a physical storage device, thus reducing a burden to manage a secret key used in a payment service for example. Furthermore, the secret reconstructible value distribution system according to one embodiment also can be applied to an authentication system using a ID and a password for example. When the password is used as an original secret, the secret reconstructible value distribution system according to one embodiment can avoid a risk where the same or similar password is repeatedly used in any services to cause the leakage of the password.

On the other hand, the storage device storing shares therein is implemented in a removable storage device that can be removed by a computer terminal, thereby allowing the shares not to be accessed from the network. The secret reconstructible value distribution system according to one embodiment prevents the original secret from being reconstructed unless k shares are collected. Thus, at least n-(k-1) shares are stored in the removable storage device that is removed from the computer terminal and is stored, thus providing very high security.

It is noted that the components of the formulae and hardware described in the above embodiment are merely illustrative and other configurations also may be used. The order of the operations described in the above embodiment is not always limited to the above-described order and any order also may be used. Furthermore, additional steps also may be newly included without departing from the basic concept of this embodiment.

Furthermore, the secret reconstructible value distribution system according to one embodiment is provided by a program executed by the computer terminal 1. The program may be stored in a non-transitory storage medium. The non-transitory storage medium exemplarily include, for example, a read-only memory (ROM), a random access memory (RAM), a resistor, a cache memory, a semiconductor memory device, a built-in hard disk, and a magnetic medium such as a removable disc device, a magneto-optical medium, as well as optical media such as a CD-ROM disc and a digital versatile disc (DVD).

**Claims**

1.  A method-performed by a computer, comprising:

    generating n secret reconstructible values based on an original secret used to process information to be exchanged, the original secret can be reconstructed using at least k secret reconstructible values among the generated n secret reconstructible values and n>=k>=2 is established;
    storing the generated n secret reconstructible values in the corresponding n physical storage devices;
    storing a first secret reconstructible value among the generated n secret reconstructible values in the first removable storage device;
    deleting the generated original secret.

2.  The method according to claim 1, further comprising:

    reading the corresponding k secret reconstructible values from k physical storage devices among the n physical storage devices;
    using the read k secret reconstructible values to reconstruct the original secret; and
    deleting the k secret reconstructible values.

3.  The method according to claim 1 or 2, wherein:

    at least n-(k-1) physical storage devices among the n physical storage devices are removable storage devices, and
    the method further comprises determining whether the removable storage device is connected to the computer or not.

4.  The method according to any one of claims 1-3,
    at least one of the n physical storage devices is a first removable storage device,
    at least another one of the n physical storage devices is a second removable storage device and the first removable storage device and the second removable storage device are the same type of removable storage device,
    the first removable storage device and the second removable storage device are the same type of removable storage device,
    wherein storing the generated n secret reconstructible values in the corresponding n physical storage devices comprises:

    storing a first secret reconstructible value among the generated n secret reconstructible values in the first removable storage device;
    determining whether the second removable storage device is connected to the computer or not;
    determining whether the second removable storage device is a removable storage device physically different from the first removable storage device;
    storing, in response to the determination that the second removable storage device is a removable storage device physically different from the first removable storage device, a second secret reconstructible value among the generated n secret reconstructible values in the second removable storage device.

5.  The method according to any one of claims 1 to 4, further comprising generating the original secret or receiving the original secret.

6. The method according to any one of claims 1-4, further comprising executing a plurality of application programs to generate the original secret used to process information to be exchanged, wherein at least one of the n physical storage devices is a storage device included in the computer and the storage device includes a plurality of independent logical storage areas to the plurality of application programs, respectively, by storing one of the generated n secret reconstructible values in any one of the plurality of logical storage areas, wherein storing the generated n secret reconstructible values in the corresponding n physical storage devices comprises storing one of the generated n secret reconstructible values in any one of the plurality of logical storage areas.

7. The method according to any one of claims 1 to 6, wherein generating the n secret reconstructible values is performed using a (k, n) threshold value method.

8. The method according to any one of claims 1 to 7, wherein the original secret is a secret key.

9. The method according to any one of claims 1 to 8, wherein the processing is a signature.

10. The method according to any one of claims 1 to 9, wherein the information to be exchanged is transaction history information of a virtual currency.

11. A computer device, comprising:

    a control device;
    a memory that is coupled to the control device and that stores a computer-executable instruction therein, wherein the computer-executable instruction, when executed by the control device, causes the computer device to perform the method according to any one of claims 1 to 10.

12. A computer program including a computer-executable instruction, when executed by a computer, causing the computer to perform the method according to any one of claims 1 to 10.

**FIG.1**

**FIG.2**

**FIG.3**

**FIG.4**

**FIG.5**

EP 3 681 097 A1

FIG.6

EP 3 681 097 A1

**FIG.7**

## INTERNATIONAL SEARCH REPORT

| International application No. |
|---|
| PCT/JP2018/013207 |

A. CLASSIFICATION OF SUBJECT MATTER
Int.Cl. H04L9/08(2006.01)i, G09C1/00(2006.01)i

According to International Patent Classification (IPC) or to both national classification and IPC

B. FIELDS SEARCHED

Minimum documentation searched (classification system followed by classification symbols)
Int.Cl. H04L9/08, G09C1/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-104575 A (NIPPON TELEGRAPH AND TELEPHONE) 14 May 2009, paragraphs [0022], [0135]–[0159] (Family: none) | 1-3, 5, 7-12<br>4, 6 |
| Y<br>A | JP 2007-304962 A (FUJITSU LIMITED) 22 November 2007, paragraphs [0037], [0063] & US 2007/0266261 A1, paragraphs [0115], [0190] | 1-3, 5, 7-12<br>4, 6 |

☒ Further documents are listed in the continuation of Box C.　　☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08.06.2018 | 19.06.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 681 097 A1**

| | INTERNATIONAL SEARCH REPORT | International application No. |
|---|---|---|
| | | PCT/JP2018/013207 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2008/096608 A1 (SENKEN CO., LTD.) 14 August 2008, paragraphs [0047], [0061] & US 2010/0049966 A1, paragraphs [0090], [0116] & EP 2116956 A1 & KR 10-2009-0117722 A | 2, 3, 10 |
| Y A | JP 2007-72613 A (TOMA, Makoto) 22 March 2007, paragraph [0042] (Family: none) | 3, 10 4 |
| Y | WO 2017/082237 A1 (NIPPON TELEGRAPH AND TELEPHONE) 18 May 2017, paragraph [0034] (Family: none) | 10 |
| A | JP 2007-134952 A (SOFTBANK MOBILE CORPORATION) 31 May 2007, paragraph [0040], fig. 5 (Family: none) | 6 |
| A | 小暮 淳ほか, 次世代 ICT を切り開くブロックチェーン技術, FUJITSU, 01 September 2017, vol. 68, no. 5, pp. 62-67 (KOGURE, Jun et al., Blockchain technology for next generation ICT) | 1-12 |

Form PCT/ISA/210 (continuation of second sheet) (January 2015)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HIROSHI DOI.** Himitsu Bunsan Hou To Sono Ouyou Ni Tsuite. *Jouhou Security Sougou Kagaku,* November 2012, vol. 4, https://www.iisec.ac.jp/proc/vol0004/doi.pdf>

- **G. R. BLAKLEY.** Safeguarding cryptographic keys. *Proc. of the National Computer Conference,* 1979, vol. 48, 313-317, https://www.computer.org/csdl/proceedings/afips/1979/5087/00/50870313.pdf>